# EUROPEAN PATENT SPECIFICATION

(11) **EP 4 183 255 B1**
(45) Date of publication and mention of the grant of the patent: **17.07.2024**
(21) Application number: 22205672.3
(22) Date of filing: 04.11.2022
(51) Int. Cl.: A21C 13/00, B27N 5/00

(54) **THE USE OF CORK MATERIAL IN THE PREPARATION OF THE DOUGH AND A MOULD FOR PROOFING A DOUGH PORTION**
DIE VERWENDUNG VON KORKMATERIAL BEI DER ZUBEREITUNG DES TEIGS UND EINER FORM ZUM GÄREN EINER TEIGPORTION
L'UTILISATION D'UN MATÉRIAU EN LIÈGE DANS LA PRÉPARATION DE LA PÂTE ET D'UN MOULE POUR L'ÉTUVAGE D'UNE PORTION DE PÂTE

(30) Priority: 23.11.2021 PL 43960821
(43) Date of publication of application: 24.05.2023
(73) Proprietor: Pozlutko, Weronika, 31-644 Krakow (PL); Pozlutko, Michal, 31-644 Kraków (PL)
(72) Inventor: Pozlutko, Weronika, 31-644 Krakow (PL); Pozlutko, Michal, 31-644 Kraków (PL)
(74) Representative: Bartula-Toch, Marta

(56) References cited:
- CH-A- 222 944
- DE-A1- 19 933 947
- FR-A- 510 983
- FR-A- 946 393
- ANONYMOUS: "Cleverbrand Cork bowl for fruit, ø ca. 30 cm, height approx. 8 cm : Amazon.nl: Home & Kitchen", 5 December 2020 (2020-12-05), pages 1 - 3, XP093038684, Retrieved from the Internet <URL:https://www.amazon.nl/Cleverbrand-Kurkschaal-voor-fruit-hoogte/dp/B07PLX329X/ref=sr_1_13?__mk_nl_NL=ÅMÅZÕÑ&crid=3T8B8R6NV6HIK&keywords=kurk+schaal&qid=1681308034&sprefix=kurk+schaal,aps,60&sr=8-13&language=en_GB> [retrieved on 20230412]
- S. P. SILVA ET AL: "Cork: properties, capabilities and applications", INTERNATIONAL MATERIALS REVIEWS, vol. 50, no. 6, 1 December 2005 (2005-12-01), pages 345 - 365, XP055061553, ISSN: 0950-6608, DOI: 10.1179/174328005X41168

## Description

The subject of the invention is a new application of cork material in the process of preparing dough, especially bread dough, and a mold for proofing portions of dough, especially bread dough.

The process of preparing bread dough consists of several stages, two of which are fermentation. The second and final fermentation is referred to as proofing. Proofing is used to increase the volume of the prepared dough and to achieve the desired shape of the bread. In both domestic and professional use there are many different types of molds for proofing bread dough. Such molds are made from a variety of materials, although perhaps the most popular is wicker. Wicker is used to make woven or nailed baskets for proofing. Similarly, from rattan, which has properties similar to wicker. However, it is increasingly common to find proofing molds made of plastic or conglomerates of natural and artificial components. In such molds, an attempt is made to reproduce the gas exchange conditions that are highly desirable and naturally occur in wicker baskets, through the use of various types of more or less clever perforations and holes of various shapes, made in the bottom and walls of the mold. In addition, as the molds for proofing bread dough affect the final shape and size of the bread, they come in different sizes, contours and designs.

In the case of wicker and rattan molds in particular, their interiors are lined with pieces of cloth, preferably linen. It ensures that the raw bread is easily separated from the mold and placed in the oven.

Document DE 19933947 A1 discloses a proofing mold according to the prior art.

Patent document EP 1937076 B1 describes a mold for storing pieces of dough, in particular for proofing. The mold is in the shape of a basket with a base and side walls made of plastic, the side walls including interconnected side ribs and, in at least part of the walls, slots or vents between the ribs. The mold is characterized by the fact that the side ribs on the outside of the basket in its lower half closerto the base, in the area of the intersections defined by them, form pathways for the escape of warm air from the interior of the basket containing moisture.

From the utility model protection right DE8405177U1, a bread mold made of plastic in the shape of a bowl for shaping dough for bread before baking is known, with a frame that opens outward, characterized by the fact that holes are arranged in the walls of the container for better shaping of the dough for bread, allowing air from outside the container to flow between the inner walls and the dough during the dough shaping process.

More advanced solutions for this purpose have also emerged.

From patent US9980494B2, a dough proofing device is known that includes a proofing chamber for holding the dough during the proofing process and having a door for access to the proofing chamber. The air duct assembly includes at least one inlet opening and at least one fan for drawing air from the proofing chamber. At least one heating element is included in the air duct for heating the air and a duct for supplying heated air back to the proofing chamber. The air chamber is divided into an outlet section and an inlet section, with the outlet section being connected by flow to the air duct assembly and the inlet section being connected by flow to the proofing chamber.

From the description of the utility model CN202145826U, a dough rising container for home use automatically controlling the temperature is known, which is mainly used for heating the dough during proofing. The device is mainly characterized by the fact that a thermostat is placed on the side inner wall of the container, and a heating cable connected to the thermostat in series runs on the other side inner walls of the container. The temperature inside the dough rising container can be maintained within a desired range, so that the dough rises effectively.

From the application CN103355376A, a dough fermentation device is known which contains a housing and a dough growth container which is placed in the housing and in which flour and powdered yeast are placed, with a cavity between the bottom wall of the dough growth container and the bottom wall of the housing, a heating device is placed in the cavity, and handles are symmetrically arranged on the lid. The heating device placed at the bottom of the dough growth unit allows to provide heat during dough rising in winter and reduce the dough rising time.

Cork is a natural lightweight raw material with a wide range of uses. It is waterproof, non-toxic and durable.

The essence of the solution according to the first invention is a use of cork material consisting of natural cork granules with a grain size of 0.5 to 5 mm in an amount of 80 to 90% by volume, bounded by a binder in an amount of 10 to 20% by volume with a strength of 700 to 800 kPa and a density of 200 to 370 kg/m3, for dough proofing molds.

Advantageously the binder is an adhesive approved for food contact.

In an advantageous implementation the binder is methylenediphenyl diisocyanate (2,2'-MDI, 2,4'-MDI, 4,4'-MDI).

Advantageously the binder is a resin approved for food contact.

The essence of the solution according to the second invention is that the mold for proofing portions of dough is made of cork material consisting of natural cork granules with a grain size of 0.5 to 5 mm in an amount of 80 to 90% by volume bounded by a binder in an amount of 10 to 20% by volume with a strength of 700 to 800 kPa and a density of 200 to 370 kg/m3.

The advantage of the solution according to the invention is to obtain lightweight molds of various shapes and sizes, which are cut from cork blocks or extruded on a press from cork granules using pressure and temperature. Unexpectedly, even though the molds have no visible holes and perforations the growing dough breathes and the fermantation process occurs flawlessly through the micro-gaps between the cork granule fractions. Thanks to the natural roughness of the cork, we get the effect of good adhesion of flour to the inner edges of the mold, which prevents the dough from sticking to these edges and facilitates its falling out of the mold after the proofing process is completed. The molds are durable and can be washed many times, even in hot water. Cork, thanks to the presence of tannins in its composition and the absence of protein substances prone to decomposition, retains resistance to mildew and mold, which is a great advantage over molds made of rattan or wicker, which are relatively quickly subject to such processes. Its surfaces and structure do not provide a breeding ground for fungi and mold, do not create conditions for them to settle. Cork has an increased resistance to biological corrosion resulting from moisture and conditions conducive to putrefactive processes often found in bakeries.

Cork molds have very good thermal insulation properties (the thermal conductivity coefficient for cork is 0.037-0.045 W/mK), which helps bread dough rise by retaining some of the heat inside the mold.

The solution according to the invention is illustrated by the following embodiments.

### Example I

A mold for proofing portions of dough made of cork plastic consisting of natural cork granules with a grain size of 2 to 5 mm in an amount of 80% by volume bound with methylenediphenyl diisocyanate (2,2'-MDI, 2,4'-MDI, 4,4'-MDI) in an amount of 20% by volume. The mold has a strength of 800 kPa and a density of 350 kg/m3.

### Example II

A mold for proofing portions of dough made of cork plastic consisting of natural cork granules with a grain size of 0.5 to 3.5 mm at 87% by volume bound with methylenediphenyl diisocyanate (2,2'-MDI, 2,4'-MDI, 4,4'-MDI) at 13% by volume. The mold has a strength of 750 kPa and a density of 270 kg/m3.

### Example III

A mold for proofing portions of dough made of cork plastic consisting of natural cork granules with a grain size of 0.5 to 5 mm in an amount of 80% by volume bound by resin approved for contact with food in an amount of 20% by volume. The mold has a strength of 800 kPa and a density of 350 kg/m3.

## Claims

1. A use of cork material in the preparation of dough, especially bread dough, wherein the cork material consists of natural cork granules with a grain size of 0.5 to 5 mm in an amount of 80 to 90% by volume, bounded by a binder in an amount of 10 to 20% by volume with a strength of 700 to 800 kPa and a density of 200 to 370 kg/m3, wherein the cork material is used for dough proofing molds.

2. The use of cork according to claim 1 wherein the binder is an adhesive approved for food contact.

3. The use of cork according to claim 2 wherein the binder is methylenediphenyl diisocyanate (2,2'-MDI, 2,4'-MDI, 4,4'-MDI).

4. The use of cork according to claim 1 wherein the binder is a resin approved for food contact.

5. A mold for proofing portions of dough, especially bread dough, in the shape of a container, **characterized in that** the mold is made of cork material consisting of natural cork granules with a grain size of 0.5 to 5 mm in an amount of 80 to 90% by volume bounded by a binder in an amount of 10 to 20% by volume with a strength of 700 to 800 kPa and a density of 200 to 370 kg/m3.

## Patentansprüche

1. Verwendung eines Korkmaterials zur Herstellung von Teig, insbesondere Brotteig, bestehend aus Naturkorkgranulat mit einer Korngröße von 0,5 bis 5 mm in einer Menge von 80 bis 90 Vol.-%, gebunden durch ein Bindemittel in einer Menge von 10 bis 20 Vol.-% mit einer Festigkeit von 700 bis 800 kPa und einer Dichte von 200 bis 370 kg/m3 für Teiggärformen.

2. die Anwendung nach Anspruch. 1, **dadurch gekennzeichnet, dass** das Bindemittel ein für den Lebensmittelkontakt zugelassener Klebstoff ist.

3. die Verwendung nach Anspruch 2, **dadurch gekennzeichnet, dass** das Bindemittel ein lebensmittelgeeigneter Klebstoff ist. 2, **dadurch gekennzeichnet, dass** das Bindemittel Methylendiphenyl-Diisocyanat (2,2'-MDI, 2,4'-MDI, 4,4'-MDI) ist.

4. Anwendung nach Anspruch. 1, **dadurch gekennzeichnet, dass** das Bindemittel ein für den Lebensmittelkontakt zugelassenes Harz ist.

5. eine Form zum Gären von Teigportionen, insbesondere Brotteig, in Form eines Behälters, **dadurch gekennzeichnet, daß** sie aus Korkmaterial hergestellt ist, das aus Naturkorkgranulat mit einer Korngröße von 0,5 bis 5 mm in einer Menge von 80 bis 90 Vol.-% besteht, das durch ein Bindemittel in einer Menge von 10 bis 20 Vol.-% mit einer Festigkeit von 700 bis 800 kPa und einer Dichte von 200 bis 370 kg/m3 gebunden ist.

## Revendications

1. l'utilisation d'un matériau liège dans la préparation de pâtes, notamment de pâtes à pain constituées de granulés de liège naturel d'une granulométrie de 0,5 à 5 mm dans une proportion de 80 à 90% en volume liés par un liant dans une proportion de 10 à 20% en volume avec une résistance de 700 à 800 kPa et une densité de 200 à 370 kg/m3 pour les moules de fermentation de pâte.

2. l'application selon la revendication. 1 **caractérisée par le fait que** le liant est un adhésif agréé pour le contact alimentaire.

3. l'utilisation selon la revendication 2, **caractérisée par le fait que** le liant est une colle de qualité alimentaire. 2 **caractérisée par le fait que** le liant est du diisocyanate de méthylènediphényle (2,2'-MDI, 2,4'-MDI, 4,4'-MDI).

4. Application selon la revendication. 1, **caractérisée par le fait que** le liant est une résine agréée pour le contact alimentaire.

5. moule pour l'étuvage de portions de pâte, notamment de pâte à pain, en forme de récipient, **caractérisé en ce qu'**il est réalisé en matériau liège constitué de granulés de liège naturel d'une granulométrie de 0,5 à 5 mm dans une proportion de 80 à 90% en volume liés par un liant dans une proportion de 10 à 20% en volume avec une résistance de 700 à 800 kPa et une masse volumique de 200 à 370 kg/m3.
